(19) Europäisches Patentamt
European Patent Office
Office européen des brevets

(11) EP 3 031 237 B1

(12) **EUROPEAN PATENT SPECIFICATION**

(45) Date of publication and mention of the grant of the patent:
**05.06.2019 Bulletin 2019/23**

(21) Application number: **14835060.6**

(22) Date of filing: **05.08.2014**

(51) Int Cl.:
***H04B 7/02*** *(2018.01)*

(86) International application number:
**PCT/JP2014/071349**

(87) International publication number:
**WO 2015/020232 (12.02.2015 Gazette 2015/06)**

# (54) GENERATING PRECODERS FOR JOINT TRANSMISSION FROM MULTIPLE TRANSMISSION POINTS TO MULTIPLE USER EQUIPMENTS IN A DOWNLINK COORDINATED MULTIPOINT TRANSMISSION/RECEPTION COMMUNICATIONS SYSTEM

ERZEUGUNG VON PRÄCODIERERN FÜR GEMEINSAME ÜBERTRAGUNG VON MEHREREN ÜBERTRAGUNGSPUNKTEN AN MEHRERE TEILNEHMERVORRICHTUNGEN IN EINEM ABWÄRTSKOORDINIERTEN KOMMUNIKATIONSSYSTEM MIT MEHRPUNKTÜBERTRAGUNG/-EMPFANG

GÉNÉRATION DE PRÉCODEURS POUR UNE TRANSMISSION JOINTE À PARTIR DE PLUSIEURS POINTS DE TRANSMISSION VERS PLUSIEURS ÉQUIPEMENTS UTILISATEUR DANS UN SYSTÈME DE COMMUNICATION À ÉMISSION/RÉCEPTION MULTIPOINT COORDONNÉE EN LIAISON DESCENDANTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.08.2013 AU 2013902955**

(43) Date of publication of application:
**15.06.2016 Bulletin 2016/24**

(73) Proprietor: **NEC Corporation**
**Tokyo 108-8001 (JP)**

(72) Inventors:
- **PHAM, Duong**
**Mulgrave, Victoria 3170 (AU)**
- **MARUTA, Yasushi**
**Tokyo 1088001 (JP)**

(74) Representative: **MacDougall, Alan John Shaw et al**
**Mathys & Squire LLP**
**The Shard**
**32 London Bridge Street**
**London SE1 9SG (GB)**

(56) References cited:
**WO-A1-2011/158302**
**WO-A1-2013/112829**
**WO-A2-2012/094608**
**US-A1- 2011 103 287**
**US-A1- 2012 287 799**
**US-A1- 2013 021 925**
**US-A1- 2013 083 681**
**US-A1- 2013 089 159**
**US-A1- 2013 094 380**
**US-A1- 2013 114 513**

- **NTT DOCOMO: 'Investigation of Aggregated CQI Feedback in Rel-11 CoMP' 3GPP TSG-RAN WG1 MEETING#69 RL-121933 25 May 2012, XP050600234**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### Technical Field

The present invention relates to generating precoders for joint transmission (JT) from multiple transmission points to multiple user equipments in a Downlink Coordinated Multi-Point transmission/reception (DL CoMP) communications system.

### Background Art

The following abbreviations are used herein:

| | |
|---|---|
| CoMP | Coordinated Multi-Point (the abbreviation CoMP often also means Coordinated Multi-Point transmission/ reception, as will be evident from the context) |
| CQI | Channel Quality Indicator |
| CSI | Channel State Information - CSI includes PMI, RI, CQI (see below) |
| DL | Downlink |
| DMRS | Demodulation Reference Signal |
| eNodeB | Evolved NodeB (i.e. evolved base station) |
| JT | Joint Transmission |
| MMSE | Minimum Mean Squared Error |
| PMI | Precoder Matrix Indicator |
| SINR | Signal to Interference plus Noise Ratio |
| RI | Rank Indicator |
| TP | Transmission Point |
| UE | User Equipment |

Also, the following mathematical notations are adopted herein:

- $|a|$ denotes the absolute value of $a$;
- $\|\mathbf{a}\|^2 = |a(1)|^2 + ... + |a(N)|^2$ (unless stated otherwise);
- $Ea$ denotes the expectation (or expected value) of $a$; and
- For any matrix $\mathbf{A}$, $\mathbf{A}^H$ denotes the conjugate transpose of $\boldsymbol{A}$, and $tr(\boldsymbol{A})$ represents the operation of taking the trace of $\boldsymbol{A}$.

Joint Transmission Downlink Coordinated Multi-Point transmission/reception (JT - DL CoMP).

Fig. 1 schematically represents JT in a DL CoMP system. The system includes multiple TPs (these may be eNodeBs), each TP being equipped with multiple antennas, and multiple UEs where each UE is also equipped with multiple antennas. The multiple TPs transmit data to the multiple UEs on the same time-frequency. Generally, to minimise interferences between TPs and between UEs, the transmission is carried out with CoMP precoders which are generated based on (i.e. generated from the knowledge of) the channel state information (CSI).

Each UE feeds back CSI (which includes RI, PMI and CQI) to its serving TP via uplink, as illustrated in Fig. 2.

In CSI measurement, for each UE there are as many CSI configurations as there are TPs involved in JT - DL CoMP. Figs. 3A and 3B show CSI measurement for a UE involved in JT - DL CoMP with two TPs. The CSI config#0 is for TP#0 (the serving TP) and the CSI config#1 is for TP#1 (the neighbouring TP).

### *System Description*

A JT DL CoMP system having $N_{TP}$ TPs and $N_{UE}$ UEs may be described mathematically as set out below.

Let $\tau_n$ denote the number of antennas at the $n$-th TP. The total number of transmit antennas $N_{TX}$ used in DL CoMP transmission is:

$$N_{TX} = \sum_{n=1}^{N_{TP}} \tau_n .$$

Let $N_{RX}$ denote the number of receive antennas at each UE, and let $\mathbf{H}_{in}$ (size $N_{RX} \times \tau_n$) denote the channel between the $n$-th TP and the $i$-th UE.

Then the DL CoMP channel of the $i$-th UE (size $N_{RX} \times N_{TX}$) is:

$$\mathbf{H}_i = \left[\mathbf{H}_{i1}, \mathbf{H}_{i2}, \ldots, \mathbf{H}_{iN_{TP}}\right], \quad i = 1,.., N_{UE} \qquad \text{Equation (1)}$$

Let $\mathbf{V}_i$ (size $N_{TX} \times RI_i$) denote the precoder for the $i$-th UE.

The received signal at the $i$-th UE ($\mathbf{y}_i$) is given by:

$$\mathbf{y}_i = \mathbf{H}_i \sum_{j=1}^{N_{UE}} \mathbf{V}_j \mathbf{x}_j + \mathbf{n}_i, \quad i = 1,.., N_{UE} \qquad \text{Equation (2)}$$

where $\mathbf{n}_i$ is additive Gaussian noise. Note that, from the DMRS, the $i$-th UE can find the effective channel $\mathbf{H}_i\mathbf{V}_i$ to generate a decoder.

***Precoding***

Precoding is dependent on PMI which is part of the CSI. (Recall that CSI is fed back by a UE to its serving TP via uplink.) Let $p_{in}$ denote the PMI corresponding to $\mathbf{H}_{in}$. Note that in a 2-stage PMI codebook system, $p_{in}$ is a pair PMI#1 and PMI#2.

According to the 3GPP standard (TS 36.211), the precoder $\mathbf{W}_{in}$ (of size $\tau_n \times RI_i$) associated with the reported PMI $p_{in}$ is used for precoding data to send from the $n$-th TP to the $i$-th UE. The total DL CoMP precoder is therefore given by:

$$\mathbf{V}_i = \begin{bmatrix} \mathbf{W}_{i1} \\ \mathbf{W}_{i2} \\ \vdots \\ \mathbf{W}_{iN_{TP}} \end{bmatrix}, \quad i = 1,.., N_{UE} \qquad \text{Equation (3)}$$

Note that, in a 2-stage PMI codebook system, $\mathbf{W}_{in} = \mathbf{W}_{in(1)} \times \mathbf{W}_{in(2)}$ associated with PMI#1 and PMI#2.

Precoding in this way is not optimal and it may be desirable to provide an improved or at least an alternative way of generating precoders.

It is to be clearly understood that mere reference herein to previous or existing systems, methods, models, processes, procedures, practices, publications or other information, or to any problems or issues, does not constitute an acknowledgement or admission that any of those things individually or in any combination formed part of the common general knowledge of those skilled in the field, or that they are admissible prior art.

US 2013/089159 A1 discloses a method for deciding a precoding vector of coordinated multipoint transmission (CoMP) for at least one user equipment based on channel state information for CoMP received from the user equipment, wherein the channel state information includes inter-cell correlation property between a serving cell serving the user equipment and a cooperating cell for CoMP.

US 2011/103287 A1 discloses a method of operating a communication device including determining a first coordinated multipoint (CoMP) mode, electronically receiving feedback from a user device in the uniform feedback format, and determining transmission parameters of the first CoMP mode. The first CoMP mode includes one of a plurality of CoMP modes, and each of the plurality of CoMP modes is configured to operate using a uniform feedback format.

US 2013/021925 A1 discloses a method for configuring coordinated multipoint (CoMP) transmission by an eNode B. Feedback information is received from a user equipment (UE). A CoMP transmission measurement set is determined. The CoMP transmission measurement set is sent to the UE. A channel state information (CSI) report of the CoMP measurement set is received from the UE. A CoMP transmission method used for each CoMP transmission point in the CoMP measurement set is selected.

## Summary of Invention

In one broad form, the invention provides a method and a system as disclosed in the appended independent claims. Optional, but advantageous features are disclosed in the appended dependent claims.

## Brief Description of Drawings

The invention is defined by the appended claims. In the following, embodiments not falling within the scope of the claims should be understood as examples useful to understand the invention. The Detailed Description will make reference to a number of drawings as follows:

Fig. 1 is schematically represents a JT - DL CoMP system.
Fig. 2 is schematically represents the way each UE feeds back CSI to its serving TP via uplink.
Fig. 3A schematically illustrates CSI measurement for JT - DL CoMP.
Fig. 3B schematically illustrates CSI measurement for JT - DL CoMP.
Fig. 4 is a flowchart illustrating, for the case of non-coherent precoding, a method for generating j-MMSE precoders in accordance with the embodiment of the invention discussed below.
Fig. 5 is a flowchart illustrating, for the case of non-coherent precoding, a method for computing the Lagrange multiplier for the *n*-th TP.
Fig. 6 is a flowchart illustrating, for the case of coherent precoding, a method for generating j-MMSE precoders in accordance with the embodiment of the invention discussed below.
Fig. 7 is a flowchart illustrating, for the case of coherent precoding, a method for computing the Lagrange multiplier for all TPs.
Fig. 8 schematically illustrates the estimation of a UE's noise variance based on the reported CQI of the serving TP.
Fig. 9 schematically illustrates RI and CQI collection from the reported RI and CQI for transmission to the *i*-th UE.

## Description of Embodiments

Joint transmit & receive optimisation methods have previously been proposed. See, for example, Sampath H. and Paulraj A., "Joint Transmit and Receive Optimization for High Data Rate Wireless Communication Using Multiple Antennas", Thirty-Third Asilomar Conference on Signals, Systems, and Computers, 1999, and Zhang J., et. al., "Joint Linear Transmitter and Receiver Design for Downlink of Multiuser MIMO Systems", IEEE Communications Letters, Vol. 9, No. 11, November 2005.

Embodiments of the present invention provide MMSE precoders based (at least somewhat) on the joint transmit & receive optimization methods discussed in the above academic papers. However, unlike the methods in these academic papers, the present invention does not require knowledge of the channel to generate MMSE precoders. Instead (and in contrast), embodiments of the invention require only the PMI, which is fed back by UEs to serving TPs, as shown in Fig. 2. The precoder according to the particular embodiments of the invention discussed below will be referred to as the j-MMSE precoder.

### *A) Non-coherent precoding*

In the case of non-coherent precoding, the individual j-MMSE precoder $\mathbf{V}_{in}$ is computed using the joint transmit and receive MMSE optimization as follows.

*Finding representative channels*

Let $\Omega_{RI}$ denote the fixed codebook of representative channel matrices which is generated from the PMI codebook(s). There are different $\Omega_{RI}$ for different RI.

- For $RI_i = N_{RX}$, the $\Omega_{RI}$ contains matrices $\hat{\mathbf{H}}(m)$, $m$ = 1,... of size $N_{RX} \times \tau_n$
- For $RI_i < N_{RX}$, the $\Omega_{RI}$ contains vectors $\hat{\mathbf{h}}(m)$, $m$ = 1,... of size $\tau_n \times 1$

Let $\hat{\mathbf{H}}_{in}$ be the representative for the channel $\mathbf{H}_{in}$. The representative channel is obtained as follows:

If $RI_i = N_{RX}$, then

$$\hat{\mathbf{H}}_{in} = \hat{\mathbf{H}}(m^*) \in \mathbf{\Omega}_{RI}, \quad i = 1,\ldots,N_{UE}, \; n = 1,\ldots,N_{TP}$$

with

$$m^* = \arg\max_{m} tr\left\{\left[\hat{\mathbf{H}}(m)\mathbf{W}_{in}\right]^H\left[\hat{\mathbf{H}}(m)\mathbf{W}_{in}\right]\right\},\ \hat{\mathbf{H}}(m) \in \mathbf{\Omega}_{RI} \qquad \text{Equation (4)}$$

If $RI_i < N_{RX}$, then

1) Calculate correlation values:

$$C_{in}(m) = tr\left\{\left[\hat{\mathbf{h}}^H(m)\mathbf{W}_{in}\right]^H\left[\hat{\mathbf{h}}^H(m)\mathbf{W}_{in}\right]\right\} \quad m = 1,... \qquad \text{Equation (5)}$$

and

2) Sort to find the $N_{RX}$ largest correlation values $C_{in}(m_1) > C_{in}(m_2) > ... > C_{in}(m_{N_{RX}})$ and the $N_{RX}$ corresponding $\hat{\mathbf{h}}(m_1)$, $\hat{\mathbf{h}}(m_2)$,..., $\hat{\mathbf{h}}(m_{N_{RX}})$ to form the channel matrix

$$\hat{\mathbf{H}}_{in} = \left[\hat{\mathbf{h}}(m_1),\hat{\mathbf{h}}(m_2),...,\hat{\mathbf{h}}(m_{N_{RX}})\right]^H \qquad \text{Equation (6)}$$

Here $\mathbf{W}_{in}$ (of size $\tau_n \times RI_i$) is the precoder in the 3GPP standard (TS 36.211) associated with the PMI $p_{in}$. Note that, if the PMI consists of PMI#1 and PMI#2, then $\mathbf{W}_{in} = \mathbf{W}_{in(1)} \times \mathbf{W}_{in(2)}$.

*Generating the j-MMSE precoder* $\mathbf{V}_{in}$ *(see Fig. 4)*

Let $(m)$ denote the $m$-th iteration of the procedure. The precoder is generated as follows:

1) (401) Initialize $\mathbf{G}_{in}(m = 0) = \mathbf{J}_{in}$, $i$=1,...,$N_{UE}$. Here $\mathbf{J}_{in}$ is a $RI_i \times \tau_n$ matrix with the $(a,b)$-th element being zero for $a \neq b$ and being 1 for $a = b$.

2) (402) Compute $\mathbf{V}_{in}(m + 1)$ using $\mathbf{G}_{in}(m)$ and the Lagrange multiplier $\upsilon_n$ for $i$ = 1,..., $N_{UE}$ as follows.

$$\mathbf{V}_{in}(m+1) = \left[\sum_{j=1}^{N_{UE}} \hat{\mathbf{H}}_{jn}^H \mathbf{G}_{jn}^H(m)\mathbf{G}_{jn}(m)\hat{\mathbf{H}}_{jn} + \upsilon_n \mathbf{I}\right]^{-1} \hat{\mathbf{H}}_{in}^H \mathbf{G}_{in}^H(m) \qquad \text{Equation (7)}$$

3) (403) Compute $\mathbf{G}_{in}(m + 1)$ using $\mathbf{V}_{in}(m + 1)$ and the given noise variance estimate $\sigma_i^2$ for $i$ = 1,..., $N_{UE}$ as follows.

$$\mathbf{G}_{in}(m+1) = \mathbf{V}_{in}^H(m+1)\hat{\mathbf{H}}_{in}^H\left[\sum_{j=1}^{N_{UE}} \hat{\mathbf{H}}_{in}\mathbf{V}_{jn}(m+1)\mathbf{V}_{jn}^H(m+1)\hat{\mathbf{H}}_{in}^H + \sigma_i^2\mathbf{I}\right]^{-1} \qquad \text{Equation (8)}$$

4) (404) Compute $E = \sum_{i=1}^{N_{UE}} \left\|\mathbf{G}_{in}(m+1) - \mathbf{G}_{in}(m)\right\|_F^2$

5) (405) increment m and repeat step 2), step 3) and step 4) until $\sum_{i=1}^{N_{UE}} \left\|\mathbf{G}_{in}(m+1) - \mathbf{G}_{in}(m)\right\|_F^2 < \varepsilon$. Here $\|\cdot\|_F^2$ denotes Frobenius norm and $\varepsilon$ is the convergent threshold.

6) (406) Output $\mathbf{V}_{in}(m + 1)$, $i$ = 1,...,$N_{UE}$.

*Computing the Lagrange multiplier* $\upsilon_n$ *(see Fig. 5)*

For each of the $n$-th TP, the Lagrange multiplier $\upsilon_n$ is computed as follows.

1) (501) Compute $\lambda_k$ as

$$\mathbf{U\Lambda U}^H = \sum_{i=1}^{N_{UE}} \hat{\mathbf{H}}_{in}^H \mathbf{G}_{in}^H(m)\mathbf{G}_{in}(m)\hat{\mathbf{H}}_{in} \qquad \text{Equation (9)}$$

2) (502) Set $\upsilon_{\min}$ and $\upsilon_{\max}$
3) (503) Set $\upsilon_n = (\upsilon_{\max} + \upsilon_{\min})/2$.
4) (504) Compute the following quantity $\hat{P}_n = \sum_{k=1}^{\tau_n} \frac{\lambda_k}{(\lambda_k + \upsilon_n)^2}$.
5) (505) Check if $\hat{P}_n > P_n$ and if so set $\upsilon_{\min} = \upsilon_n$ otherwise set $\upsilon_{\max} = \upsilon_n$. Here $P_n$ is the transmit power of the $n$-th TP.
6) (506) Repeat step 3), step 4) and step 5) until $|\hat{P}_n - P_n| < \varepsilon$. Here $\varepsilon$ is the convergent threshold.
7) (507) Output $\upsilon_n$.

***B) Coherent Precoding***

In the case of coherent precoding, the total j-MMSE precoder $\mathbf{V}_i$ is computed using the joint transmit and receive MMSE optimization as follows:

*Finding representative channels*

First the individual representative channel $\hat{\mathbf{H}}_{in}$ is found as in the non-coherent case discussed above. Then the total channel is generated by:

$$\hat{\mathbf{H}}_i = \left[\hat{\mathbf{H}}_{i1}, \hat{\mathbf{H}}_{i2}, \ldots, \hat{\mathbf{H}}_{iN_{TP}}\right], \quad i = 1,..,N_{UE} \qquad \text{Equation (10)}$$

*Generating the j-MMSE precoder* $\mathbf{V}_i$ *(see Fig. 6)*

Let $(m)$ denote the $m$-th iteration of the procedure. The precoder is generated as follows:

a) (601) Initialize $\mathbf{G}_i(m = 0) = \mathbf{J}_i$, $i = 1,\ldots,N_{UE}$. Here $\mathbf{J}_i$ is a $RI_i \times N_{TX}$ matrix with the $(a,b)$-th element being zero for $a \neq b$ and being 1 for $a = b$.
b) (602) Compute $\mathbf{V}_i(m+1)$ using $\mathbf{G}_i(m)$ and the Lagrange multiplier $\upsilon$ for $i=1,\ldots, N_{UE}$ as follows.

$$\mathbf{V}_i(m+1) = \left[\sum_{j=1}^{N_{UE}} \hat{\mathbf{H}}_j^H \mathbf{G}_j^H(m)\mathbf{G}_j(m)\hat{\mathbf{H}}_j + \upsilon\mathbf{I}\right]^{-1} \hat{\mathbf{H}}_i^H \mathbf{G}_i^H(m) \qquad \text{Equation (11)}$$

c) (603) Compute $\mathbf{G}_i(m+1)$ using $\mathbf{V}_i(m+1)$ and the given noise variance estimate $\sigma_i^2$ for $i=1,\ldots,N_{UE}$ as follows.

$$\mathbf{G}_i(m+1) = \mathbf{V}_i^H(m+1)\hat{\mathbf{H}}_i^H \left[\sum_{j=1}^{N_{UE}} \hat{\mathbf{H}}_i \mathbf{V}_j(m+1)\mathbf{V}_j^H(m+1)\hat{\mathbf{H}}_i^H + \sigma_i^2\mathbf{I}\right]^{-1} \qquad \text{Equation (12)}$$

d) (604) Compute $E = \sum_{i=1}^{N_{UE}} \left\|\mathbf{G}_i(m+1) - \mathbf{G}_i(m)\right\|_F^2$
e) (605) increment m and repeat step b), step c) and step d) until $\sum_{i=1}^{N_{UE}} \left\|\mathbf{G}_i(m+1) - \mathbf{G}_i(m)\right\|_F^2 < \varepsilon$.
f) (606) Output $\mathbf{V}_i(m+1)$, $i = 1, \ldots, N_{UE}$

*Computing the Lagrange multiplier $\upsilon$ (see Fig. 7)*

The Lagrange multiplier $\upsilon$ is obtained as follows.

1) (701) Compute $\lambda_k$ as

$$\mathbf{U}\Lambda\mathbf{U}^H = \sum_{i=1}^{N_{UE}} \hat{\mathbf{H}}_i^H \mathbf{G}_i^H(m)\mathbf{G}_i(m)\hat{\mathbf{H}}_i \qquad \text{Equation (13)}$$

2) (702) Set $\upsilon_{\min}$ and $\upsilon_{\max}$

3) (703) Set $\upsilon = (\upsilon_{\max} + \upsilon_{\min})/2$.

4) (704) Compute the following quantity $\hat{P} = \sum_{k=1}^{N_{TX}} \frac{\lambda_k}{(\lambda_k + \upsilon)^2}$.

5) (705) Check if $\hat{P} > P$ and if so set $\upsilon_{\min} = \upsilon$ otherwise set $\upsilon_{max} = \upsilon$. Here $P$ is the total transmit power, $P = \sum_{n=1}^{N_{TP}} P_n$.

6) (706) Repeat step 3), step 4) and step 5) until $|\hat{P} - P| < \varepsilon$. Here $\varepsilon$ is the convergent threshold.

7) (707) Output the Lagrange multiplier $\upsilon$.

***C) Noise Variance Estimating (see Fig. 8)***

The following noise variance estimation may be used for both non-coherent and coherent precoding. The method estimates the UE's noise variance from the reported CQI for the serving TP is as follows:

1) (801) Find $SINR_{il}$ based on the SINR thresholds in the CQI table.

2) (802) Calculate $\sigma_i^2$ using $SINR_{il}$ and the serving TP's transmit power $P_s$ as follows.

$$\sigma_i^2 = \frac{P_s / N_{UE}}{\sum_{l=1}^{L_i} SINR_{il} / L_i}, \quad i = 1,\ldots,N_{UE} \qquad \text{Equation (14)}$$

where $L_i$ is the number of codewords used for the $i$-th UE. For less complexity, the noise variance can be fixed to zero as:

$$\sigma_i^2 = 0, \quad i = 1,\ldots,N_{UE} \qquad \text{Equation (15)}$$

***D) Rank and CQI selection (see Fig. 9)***

Because, for a given UE, all TPs have common transmission rank and common CQI, it follows that rank and CQI selection is necessary. From the as many as $N_{TP}$ reported $PI_{in}$, the majority is selected as the single common $RI_i$ for the $i$-th UE. The selection can be done using the histogram. Then only $CQI_{i\hat{n}}(l)$ associated with the selected $RI_i$ are the candidates for CQI selection. The selection is carried out per codeword independently. The majority among the candidates is selected as the common CQI for the $l$-th codeword $CQI_i(l)$. The selection can be done using the histogram.

*Advantages*

As discussed above, embodiments of the present invention do not require knowledge of the channel to generate the j-MMSE precoder. Rather, they require only the PMI which is fed back by UEs. This may provide a number of advantages. For instance, it may provide improved performance in comparison with methods which directly use reported PMI. Also, as is made evident above, the invention is applicable to both coherent and non-coherent precoding.

In the present specification and claims (if any), the word 'comprising' and its derivatives including 'comprises' and 'comprise' include each of the stated integers but does not exclude the inclusion of one or more further integers.

Reference throughout this specification to 'one embodiment' or 'an embodiment' means that a particular feature, structure, or characteristic described in connection with the embodiment is included in at least one embodiment of the present invention. Thus, the appearance of the phrases 'in one embodiment' or 'in an embodiment' in various places throughout this specification are not necessarily all referring to the same embodiment. Furthermore, the particular features, structures, or characteristics may be combined in any suitable manner in one or more combinations.

In compliance with the statute, the invention has been described in language more or less specific to structural, systems or methodical features. It is to be understood that the invention is not limited to specific features shown or described since the means herein described comprises preferred forms of putting the invention into effect. The invention is, therefore, claimed in any of its forms or modifications within the proper scope of the appended claims (if any) appropriately interpreted by those skilled in the art.

This application is based upon and claims the benefit of priority from Australia Patent Application No.2013902955, filed on August 7, 2013.

**Reference Signs List**

TP0 SERVING TP

TP1 NEIGHBOURING TP

## Claims

1. A method for generating precoders for joint transmission, JT, in a downlink coordinated multi-point transmission/reception, DL CoMP, wireless communications system, the system including a plurality of transmission points, TPs, operable to communicate with a plurality of user equipments, UEs, wherein each UE has one of the TPs as its serving TP, and the method comprises:

    transmitting channel state information, CSI, from each UE to its serving TP, wherein the transmitted CSI includes precoder matrix indicators, PMI, and
    using the PMI to generate precoders for transmission of data from the plurality of TPs to the plurality of UEs;

        wherein using the PMI to generate precoders involves using the PMI to find a representative matrix, $\hat{\mathbf{H}}_{in}$, representing a channel matrix, $\mathbf{H}_{in}$, between an $n$-th TP and an $i$-th UE;
        wherein a fixed codebook, $\Omega_{RI}$, of representative matrices is generated from PMI codebook(s), wherein the CSI transmitted from each UE to its serving TP includes a rank indicator, RI, and wherein $\Omega_{RI}$ is different for different RIs;
        wherein, if an RI for the $i$-th UE, $RI_i$, is equal to a number of receive antennas of the UE, $N_{RX}$, then $\Omega_{RI}$ contains matrices $\hat{\mathbf{H}}(m)$, m≥1, of size $N_{RX}\times\tau_n$, wherein $\tau_n$ is a number of transmit antennas at the $n$-th TP;
        wherein, if $RI_i$ is less than $N_{RX}$ then $\Omega_{RI}$ contains vectors $\hat{\mathbf{h}}(m)$, m≥1, of size $\tau_n \times 1$; and
        wherein, for $RI_i = N_{RX}$, the representative matrix $\hat{\mathbf{H}}_{in}$ is found by:

$$\hat{\mathbf{H}}_{in} = \hat{\mathbf{H}}(m^*) \in \mathbf{\Omega}_{RI}, \quad i = 1,\ldots,N_{UE}, \; n = 1,\ldots,N_{TP}$$

        with

$$m^* = \arg\max tr\left\{\left[\hat{\mathbf{H}}(m)\mathbf{W}_{in}\right]^H \left[\hat{\mathbf{H}}(m)\mathbf{W}_{in}\right]\right\}, \quad \hat{\mathbf{H}}(m) \in \mathbf{\Omega}_{RI}$$

        wherein $N_{TP}$ and $N_{UE}$ are the number of TPs and UEs, respectively, and $\mathbf{W}_{in}$, having a size $\tau_n \times RI_i$, is a precoder associated with a reported PMI used for precoding data to send from the n-th TP to the i-th UE.

2. The method as claimed in claim 1 wherein, for $RI_i < N_{RX}$, the representative matrix $\hat{\mathbf{H}}_{in}$ is found by:

a) calculating correlation values as:

$$C_{in}(m) = tr\left\{\left[\hat{\mathbf{h}}^H(m)\mathbf{W}_{in}\right]^H\left[\hat{\mathbf{h}}^H(m)\mathbf{W}_{in}\right]\right\},$$ ~~m = 1,…~~

m≥1, and

b) sorting to find $N_{RX}$ largest correlation values $C_{in}(m_1) > C_{in}(m_2) > \ldots > C_{in}(m_{N_{RX}})$ and their corresponding vectors $\hat{\mathbf{h}}(m_1), \hat{\mathbf{h}}(m_2),\ldots, \hat{\mathbf{h}}(m_{N_{RX}})$ to form the channel matrix

$$\hat{\mathbf{H}}_{in} = \left[\hat{\mathbf{h}}(m_1), \hat{\mathbf{h}}(m_2),\ldots,\hat{\mathbf{h}}(m_{N_{RX}})\right]^H$$

**3.** The method as claimed in claim 2, wherein non-coherent precoding is used and the method further comprises using the representative matrix $\hat{\mathbf{H}}_{in}$, a Lagrange multiplier $\upsilon_n$ and a noise variance estimate $\sigma_i^2$ to compute precoders $V_{in}$.

**4.** The method as claimed in claim 3, wherein the precoders $V_{in}$ are computed using an iterative procedure.

**5.** The method as claimed in claim 4, wherein the precoders $V_{in}$ are computed using the following iterative procedure where $(q)$ denotes a $q$-th iteration:

a) initialize a quantity $\mathbf{G}_{in}(q = 0) = \mathbf{J}_{in}$, $i = 1,\ldots, N_{UE}$, where $\mathbf{J}_{in}$ is a $RI_i \times \tau_n$ matrix with a $(a,b)$-th element being zero for $a \neq b$ and 1 for $a = b$ ;

b) compute $\mathbf{V}_{in}(q + 1)$ using $\mathbf{G}_{in}(q)$ and the Lagrange multiplier $\upsilon_n$ for $i = 1,\ldots, N_{UE}$ as follows:

$$\mathbf{V}_{in}(q+1) = \left[\sum_{j=1}^{N_{UE}} \hat{\mathbf{H}}_{jn}^H \mathbf{G}_{jn}^H(q)\mathbf{G}_{jn}(q)\hat{\mathbf{H}}_{jn} + \upsilon_n \mathbf{I}\right]^{-1} \hat{\mathbf{H}}_{in}^H \mathbf{G}_{in}^H(q)$$

c) compute $\mathbf{G}_{in}(q+1)$ using $\mathbf{V}_{in}(q + 1)$ and the noise variance estimate $\sigma_i^2$ for $i = 1,\ldots, N_{UE}$ as follows:

$$\mathbf{G}_{in}(q+1) = \mathbf{V}_{in}^H(q+1)\hat{\mathbf{H}}_{in}^H\left[\sum_{j=1}^{N_{UE}} \hat{\mathbf{H}}_{in}\mathbf{V}_{jn}(q+1)\mathbf{V}_{jn}^H(q+1)\hat{\mathbf{H}}_{in}^H + \sigma_i^2\mathbf{I}\right]^{-1}$$

d) compute $E = \sum_{i=1}^{N_{UE}} \left\|\mathbf{G}_{in}(q+1) - \mathbf{G}_{in}(q)\right\|_F^2$

e) repeat step b), step c) and step d) until $\sum_{i=1}^{N_{UE}} \left\|\mathbf{G}_{in}(q+1) - \mathbf{G}_{in}(q)\right\|_F^2 < \varepsilon$, where $\|\cdot\|_F^2$ denotes the Frobenius norm and $\varepsilon$ is a convergent threshold; and

f) output $\mathbf{V}_{in}(q + 1)$, $i = 1, \ldots, N_{UE}$.

**6.** The method as claimed in claim 5, wherein the Lagrange multiplier $\upsilon_n$ for the $n$-th TP is computed using the following procedure:

a) compute $\lambda_k$ as

$$\mathbf{U}\Lambda\mathbf{U}^H = \sum_{i=1}^{N_{UE}} \hat{\mathbf{H}}_{in}^H\mathbf{G}_{in}^H(m)\mathbf{G}_{in}(m)\hat{\mathbf{H}}_{in}$$

b) set $\upsilon_{min}$ and $\upsilon_{max}$;
c) set $\upsilon_n$=($\upsilon_{max}$+$\upsilon_{min}$/2;
d) compute a quantity $\hat{P}_n = \sum_{k=1}^{\tau_n} \frac{\lambda_k}{(\lambda_k + \upsilon_n)^2}$ ;
e) check if $\hat{P}_n > P_n$ and if so set $\upsilon_{min} = \upsilon_n$ otherwise set $\upsilon_{max} = \upsilon_n$, where $P_n$ is a transmit power of the $n$-th TP;
f) repeat step c), step d) and step e) until $|\hat{P}_n - P_n| < \varepsilon$, where $\varepsilon$ is a convergent threshold; and
g) output $\upsilon_n$.

**7.** The method as claimed in claim 3, wherein the CSI transmitted from each UE to its serving TP includes a channel quality indicator, CQI, and the noise variance estimate $\sigma_i^2$ is found using the CQI as follows:

a) find a signal to interference plus noise ratio, $SINR_{il}$, based on thresholds in the CQI table; and
b) calculate $\sigma_i^2$ using the $SINR_{il}$ and a serving TP's transmit power $P_s$ as follows.

$$\sigma_i^2 = \frac{P_s / N_{UE}}{\sum^{L_i} SINR_{il} / L_i}, \quad i = 1,\ldots,N_{UE}$$

where $L_i$ is a number of codewords used for the $i$-th UE.

**8.** The method as claimed in claim 7, wherein, from up to $N_{TP}$ reported $RI_{in}$, a majority is selected as a single common $RI_i$ for the $i$-th UE.

**9.** The method as claimed in claim 8, wherein only $CQI_{\hat{in}}(l)$ associated with the selected $RI_i$ are candidates for CQI selection, the selection is carried out per codeword independently, and a majority among the candidates is selected as a common CQI for the $l$-th codeword $CQI_i(l)$.

**10.** A downlink coordinated multi-point transmission/reception, DL CoMP, wireless communications system in which joint transmission, JT, is performed between a plurality of transmission points, TPs, and a plurality of user equipments, UEs, wherein each UE has one of the TPs as its serving TP, channel state information, CSI, is transmitted from each UE to its serving TP, the transmitted CSI includes precoder matrix indicators, PMI, and the PMI is used to generate precoders for transmission of data from the plurality of TPs to the plurality of UEs;
wherein using the PMI to generate precoders involves using the PMI to find a representative matrix, $\hat{\mathbf{H}}_{in}$, representing the channel, $\mathbf{H}_{in}$, between an $n$-th TP and an $i$-th UE;
wherein a fixed codebook, $\Omega_{RI}$, of representative matrices is generated from PMI codebook(s), the CSI transmitted from each UE to its serving TP includes a rank indicator, RI, and $\Omega_{RI}$ is different for different RIs;
wherein, if an RI for the $i$-th UE, $RI_i$, is equal to a number of receive antennas of the UE, $N_{RX}$, then $\Omega_{RI}$ contains matrices $\hat{\mathbf{H}}(m)$, m≥1, of size $N_{RX} \times \tau_n$, wherein $\tau_n$ is a number of transmit antennas at the $n$-th TP;
wherein, if $RI_i$ is less than $N_{RX}$ then $\Omega_{RI}$ contains vectors $\hat{\mathbf{h}}(m)$, m≥1, of size $\tau_n \times 1$; and
wherein, for $RI_i = N_{RX}$, the representative matrix $\hat{\mathbf{H}}_{in}$ is found by:

$$\hat{\mathbf{H}}_{in} = \hat{\mathbf{H}}(m^*) \in \mathbf{\Omega}_{RI}, \quad i = 1,\ldots,N_{UE}, \; n = 1,\ldots,N_{TP}$$

with

$$m^* = \arg\max tr\left\{\left[\hat{\mathbf{H}}(m)\mathbf{W}_{in}\right]^H \left[\hat{\mathbf{H}}(m)\mathbf{W}_{in}\right]\right\}, \quad \hat{\mathbf{H}}(m) \in \mathbf{\Omega}_{RI}$$

wherein $N_{TP}$ and $N_{UE}$ are the number of TPs and UEs, respectively, and $\mathbf{W}_{in}$, having a size of $\tau_n \times RI_i$, is a precoder associated with a reported PMI used for precoding data to send from the n-th TP to the i-th UE.

## Patentansprüche

1. Verfahren zum Erzeugen von Vorcodierern zur gemeinsamen Übertragung, JT, in einem drahtlosen Kommunikationssystem mit koordiniertem Abwärtsstrecken-Mehrpunkt-Sende-/Empfang, DL CoMP, wobei das System mehrere Übertragungspunkte, TPs, aufweist, die betriebsfähig sind, mit mehreren Benutzereinrichtungen, UEs, zu kommunizieren, wobei jede UE einen der TPs als ihren bedienenden TP aufweist, und das Verfahren aufweist:

   Übertragen von Kanalzustandsinformationen, CSI, von jeder UE an ihren bedienenden TP, wobei die übertragenen CSI Vorcodierer-Matrixindikatoren, PMI, aufweisen, und Verwenden der PMI, um Vorcodierer zur Übertragung von Daten von den mehreren TPs zu den mehreren UEs zu erzeugen;
   wobei das Verwenden der PMI, um Vorcodierer zu erzeugen, das Verwenden der PMI aufweist, um eine repräsentative Matrix, $\hat{H}_{in}$, die eine Kanalmatrix, $H_{in}$, repräsentiert, zwischen einem n-ten TP und einer i-ten UE zu finden;
   wobei ein festes Codebuch, $\Omega_{RI}$, von repräsentativen Matrizen aus einem PMI-Codebuch (PMI-Codebüchern) erzeugt wird, wobei die von jeder UE an ihren bedienenden TP übertragenen CSI einen Rangindikator, RI, aufweisen und wobei sich das $\Omega_{RI}$ für unterschiedliche RIs unterscheidet;
   wobei, wenn ein RI für die i-te UE, $RI_i$, gleich einer Anzahl der Empfangsantennen der UE, $N_{RX}$, ist, $\Omega_{RI}$ dann Matrizen $\hat{H}(m)$, m≥1, der Größe $N_{RX} \times \tau_n$ enthält, wobei $\tau_n$ eine Anzahl der Sendeantennen am n-ten TP ist;
   wobei, wenn $RI_i$ kleiner als $N_{RX}$ ist, $\Omega_{RI}$ dann Vektoren $\hat{h}(m)$, m≥1, der Größe $\tau_n \times 1$ enthält; und
   wobei für $RI_i = N_{RX}$ die repräsentative Matrix $\hat{H}_{in}$ gefunden wird durch:

   $$\hat{\mathbf{H}}_{in} = \hat{\mathbf{H}}(m^*) \in \mathbf{\Omega}_{RI}, \quad i = 1,\ldots,N_{UE}, \; n = 1,\ldots,N_{TP}$$

   mit

   $$m^* = \arg\max tr\left\{\left[\hat{\mathbf{H}}(m)\mathbf{W}_{in}\right]^H \left[\hat{\mathbf{H}}(m)\mathbf{W}_{in}\right]\right\}, \quad \hat{\mathbf{H}}(m) \in \mathbf{\Omega}_{RI}$$

   wobei
   $N_{TP}$ und $N_{UE}$ die Anzahl der TPs bzw. UEs sind, und $W_{in}$, der eine Größe $\tau_n \times RI_i$ aufweist, ein Vorcodierer ist, der mit einem mitgeteilten PMI verbunden ist, der zum Vorcodieren von Daten verwendet wird, um vom n-ten TP an die i-te UE zu senden.

2. Verfahren nach Anspruch 1 wobei, für $RI_i < N_{RX}$ die repräsentative Matrix $\hat{H}_{in}$ gefunden wird durch:

   a) Berechnen von Korrelationswerten als:

   $$C_{in}(m) = tr\left\{\left[\hat{\mathbf{h}}^H(m)\mathbf{W}_{in}\right]^H \left[\hat{\mathbf{h}}^H(m)\mathbf{W}_{in}\right]\right\}, \quad m \geq 1,$$

   und
   b) Sortieren, um $N_{RX}$ größte Korrelationswerte $C_{in}(m_1) > C_{in}(m_2) > \ldots > C_{in}(m_{N_{RX}})$ und ihre entsprechenden Vektoren $\hat{h}(m_1),\hat{h}(m_2),\ldots,\hat{h}(m_{N_{RX}})$ zu finden, um die Kanalmatrix zu bilden:

   $$\hat{\mathbf{H}}_{in} = \left[\hat{\mathbf{h}}(m_1), \hat{\mathbf{h}}(m_2), \ldots, \hat{\mathbf{h}}(m_{N_{RX}})\right]^H$$

3. Verfahren nach Anspruch 2, wobei eine nichtkohärente Vorcodierung verwendet wird und das Verfahren ferner das Verwenden der repräsentativen Matrix $\hat{H}_{in}$, eines Lagrange-Multiplikators $\upsilon_n$ und einer Rauschvarianzschätzung $\sigma_i^2$ aufweist, um Vorcodierer $V_{in}$ zu berechnen.

4. Verfahren nach Anspruch 3, wobei die Vorcodierer $V_{in}$ mittels einer iterativen Prozedur berechnet werden.

**5.** Verfahren nach Anspruch 4, wobei die Vorcodierer $V_{in}$ mittels der folgenden iterativen Prozedur berechnet werden, wobei (q) eine q-te Iteration bezeichnet:

a) initialisiere eine Quantität $G_{in}(q = 0) = J_{in}$, $i = 1,...., N_{UE}$, wobei $J_{in}$ eine $RI_i \times \tau_n$-Matrix mit einem $(a,b)$-ten Element ist, das für $a \neq b$ null und für $a = b$ 1 ist;
b) berechne $V_{in}(q + 1)$ mittels $G_{in}(q)$ und des Lagrange-Multiplikators $\upsilon_n$ für $i = 1,...., N_{UE}$ wie folgt:

$$\mathbf{V}_{in}(q+1) = \left[\sum_{j=1}^{N_{UE}} \hat{\mathbf{H}}_{jn}^{H} \mathbf{G}_{jn}^{H}(q) \mathbf{G}_{jn}(q) \hat{\mathbf{H}}_{jn} + \upsilon_n \mathbf{I}\right]^{-1} \hat{\mathbf{H}}_{in}^{H} \mathbf{G}_{in}^{H}(q)$$

c) berechne $G_{in}(q + 1)$ mittels $V_{in}(q + 1)$ und der Rauschvarianzschätzung $\sigma_i^2$ für $i = 1,...., N_{UE}$, wie folgt:

$$\mathbf{G}_{in}(q+1) = \mathbf{V}_{in}^{H}(q+1) \hat{\mathbf{H}}_{in}^{H} \left[\sum^{N_{UE}} \hat{\mathbf{H}}_{in} \mathbf{V}_{jn}(q+1) \mathbf{V}_{jn}^{H}(q+1) \hat{\mathbf{H}}_{in}^{H} + \sigma_i^2 \mathbf{I}\right]^{-1}$$

d) berechne

$$E = \sum_{i=1}^{N_{UE}} \left\| \mathbf{G}_{in}(q+1) - \mathbf{G}_{in}(q) \right\|_F^2$$

e) wiederhole Schritt b), Schritt c) und Schritt d) bis $\sum_{i=1}^{N_{UE}} \left\| \mathbf{G}_{in}(q+1) - \mathbf{G}_{in}(q) \right\|_F^2 < \varepsilon$, wobei $\| \|_F^2$ die Frobeniusnorm ist und ε eine Konvergenzschwelle ist; und
f) gebe $V_{in}(q + 1)$, $i = 1,...., N_{UE}$ aus.

**6.** Verfahren nach Anspruch 5, wobei der Lagrange-Multiplikator $\upsilon_n$ für den n-ten TP mittels der folgenden Prozedur berechnet wird:

a) berechne $\lambda_k$ als

$$\mathbf{U}\Lambda\mathbf{U}^{H} = \sum^{N_{UE}} \hat{\mathbf{H}}_{in}^{H} \mathbf{G}_{in}^{H}(m) \mathbf{G}_{in}(m) \hat{\mathbf{H}}_{in}$$

b) setze $\upsilon_{min}$ und $\upsilon_{max}$;
c) setze $\upsilon_n = (\upsilon_{max} + \upsilon_{min})/2$;
d) berechne eine Quantität

$$\hat{P}_n = \sum_{k=1}^{\tau_n} \frac{\lambda_k}{(\lambda_k + \upsilon_n)^2}$$

e) Prüfe, ob $P_n > P_n$, und wenn dem so ist, setze $\upsilon_{min} = \upsilon_n$, andernfalls setze $\upsilon_{max} = \upsilon_n$, wobei $P_n$ is eine Sendeleistung des n -ten TP ist;
f) wiederhole Schritt c), Schritt d) und Schritt e) bis $|\hat{P}_n - P_n| < \varepsilon$, wobei ε eine Konvergenzschwelle ist; und
g) gebe $\upsilon_n$ aus.

**7.** Verfahren nach Anspruch 3, wobei die von jeder UE an ihren bedienenden TP übertragenen CSI einen Kanalqualitätsindikator, CQI, aufweisen und die Rauschvarianzschätzung $\sigma_i^2$ mittels des CQI wie folgt gefunden wird:

a) finde ein Signal-zu-Interferenz plus Rauschleistung-Verhältnis, $SINR_{il}$, beruhend auf Schwellen in der CQI-Tabelle; und
b) berechne $\sigma_i^2$ mittels des $SINR_{il}$ und einer Sendeleistung $P_s$ eines bedienenden TP wie folgt:

$$\sigma_i^2 = \frac{P_s / N_{UE}}{\sum^{L_i} SINR_{il} / L_i}, \quad i = 1,...,N_{UE}$$

wobei $L_i$ eine Anzahl von Codewörtern ist, die für die i-te UE verwendet werden.

**8.** Verfahren nach Anspruch 7, wobei aus bis zu $N_{TP}$ mitgeteilten $RI_{in}$ eine Mehrheit als eine einzelne gemeinsame $RI_i$ für die i-te UE ausgewählt wird.

**9.** Verfahren nach Anspruch 8, wobei nur $CQI_{\hat{in}}(l)$, die mit der ausgewählten $RI_i$ verbunden sind, Kandidaten für die CQI-Auswahl sind, die Auswahl unabhängig pro Codewort ausgeführt wird, und eine Mehrheit unter den Kandidaten als ein gemeinsamer CQI für das 1-te Codewort $CQI_i(l)$ ausgewählt wird.

**10.** Drahtloses Kommunikationssystem mit koordiniertem Abwärtsstrecken-Mehrpunkt-Sende-/Empfang, DL CoMP, in dem eine gemeinsame Übertragung, JT, zwischen mehreren Übertragungspunkten, TPs, und mehreren Benutzereinrichtungen, UEs, durchgeführt wird, wobei jede UE einen der TPs als ihren bedienenden TP aufweist, Kanalzustandsinformationen, CSI, von jeder UE an ihren bedienenden TP übertragen werden, die übertragenen CSI Vorcodierer-Matrixindikatoren, PMI, aufweisen, und die PMI verwendet werden, um Vorcodierer zur Übertragung von Daten von den mehreren TPs zu den mehreren UEs zu erzeugen;
wobei das Verwenden der PMI, um Vorcodierer zu erzeugen, das Verwenden der PMI aufweist, um eine repräsentative Matrix, $\hat{H}_{in}$ zu finden, die den Kanal, $H_{in}$, zwischen einem n-ten TP und einer i-ten UE repräsentiert;
wobei ein festes Codebuch, $\Omega_{RI}$, von repräsentativen Matrizen aus einem PMI-Codebuch (PMI-Codebüchern) erzeugt wird, die von jeder UE an ihren bedienenden TP übertragenen CSI einen Rangindikator, RI, aufweisen und wobei sich $\Omega_{RI}$, für unterschiedliche RIs unterscheidet;
wobei, wenn ein RI für die i-te UE, $RI_i$, gleich einer Anzahl der Empfangsantennen der UE, $N_{RX}$, ist, $\Omega_{RI}$ dann Matrizen $\hat{H}(m)$, m≥1, der Größe $N_{RX} \times \tau_n$ enthält, wobei $\tau_n$ eine Anzahl der Sendeantennen am n-ten TP ist;
wobei, wenn $RI_i$, kleiner als $N_{RX}$ ist, $\Omega_{RI}$ dann Vektoren $\hat{h}(m)$, m≥1, der Größe $\tau_n \times 1$ enthält; und
wobei, für $RI_i = N_{RX}$, die repräsentative Matrix $\hat{H}_{in}$ gefunden wird durch:

$$\hat{\mathbf{H}}_{in} = \hat{\mathbf{H}}(m^*) \in \mathbf{\Omega}_{RI}, \quad i = 1,...,N_{UE}, \; n = 1,...,N_{TP}$$

mit

$$m^* = \arg\max tr\left\{\left[\hat{\mathbf{H}}(m)\mathbf{W}_{in}\right]^H \left[\hat{\mathbf{H}}(m)\mathbf{W}_{in}\right]\right\}, \quad \hat{\mathbf{H}}(m) \in \mathbf{\Omega}_{RI}$$

wobei
$N_{TP}$ und $N_{UE}$ die Anzahl der TPs bzw. UEs sind, und $W_{in}$, der eine Größe $\tau_n \times RI_i$ aufweist, ein Vorcodierer ist, der mit einem mitgeteilten PMI verbunden ist, der zum Vorcodieren von Daten verwendet wird, um vom n-ten TP an die i-te UE zu senden.

## Revendications

**1.** Procédé de génération de précodeurs pour une transmission commune, JT, dans un système de communications sans fil de transmission/réception multipoint coordonnée de liaison descendante, DL CoMP, le système incluant une pluralité de points de transmission, TP, exploitables pour communiquer avec une pluralité d'équipements d'utilisateur, UE, dans lequel chaque UE a l'un des TP en tant que son TP de desserte, et le procédé comprend :

transmettre des informations d'état de canal, CSI, de chaque UE à son TP de desserte, dans lequel les CSI transmises incluent des indicateurs de matrice de précodeur, PMI, et
utiliser des PMI pour générer des précodeurs pour une transmission de données de la pluralité de TP à la pluralité d'UE ;
dans lequel l'utilisation des PMI pour générer des précodeurs implique l'utilisation des PMI pour trouver une matrice représentative, $\hat{\mathbf{H}}_{in}$, représentant une matrice de canaux, $\mathbf{H}_{in}$, entre un n-ième TP et un i-ème UE ;

dans lequel un livre de code fixe, $\Omega_{RI}$, de matrices représentatives est généré à partir de livre(s) de code de PMI, dans lequel les CSI transmises de chaque UE à son TP de desserte incluent un indicateur de rang, RI, et dans lequel $\Omega_{RI}$ est différent pour différents RI ;
dans lequel, si un RI pour le i-ème UE, $RI_i$, est égal à un nombre d'antennes de réception de l'UE, $N_{RX}$, alors $\Omega_{RI}$ contient des matrices $\hat{\mathbf{H}}(m)$, m ≥ 1, de taille $N_{RX} \times \tau_n$, où $\tau_n$ est un nombre d'antennes de transmission au niveau du n-ième TP ;
dans lequel, si $RI_i$ est inférieur à $N_{RX}$, alors $\Omega_{RI}$ contient des vecteurs $\hat{\mathbf{h}}(m)$, m ≥ 1, de taille $\tau_n \times 1$, et dans lequel, pour $RI_i = N_{RX}$, la matrice représentative $\hat{\mathbf{H}}_{in}$ est trouvée par :

$$\widehat{\mathbf{H}}_{in} = \widehat{\mathbf{H}}(m^*) \in \mathbf{\Omega}_{RI}, \quad i = 1, ..., N_{UE}, \; n = 1, ..., N_{TP}$$

avec

$$m^* = \arg\max tr \left\{ \left[ \widehat{\mathbf{H}}(m)\mathbf{W}_{in} \right]^H \left[ \widehat{\mathbf{H}}(m)\mathbf{W}_{in} \right] \right\}, \quad \widehat{\mathbf{H}}(m) \in \mathbf{\Omega}_{RI}$$

dans lequel
$N_{TP}$ et $N_{UE}$ sont respectivement les nombres de TP et d'UE, et $\mathbf{W}_{in}$, ayant une taille $\tau_n \times RI_i$, est un précodeur associé à un PMI rapporté utilisé pour le précodage de données à envoyer du n-ième TP au i-ème UE.

**2.** Procédé selon la revendication 1, dans lequel, pour $RI_i < N_{RX}$, la matrice représentative $\hat{\mathbf{H}}_{in}$ est trouvée par :

a) le calcul de valeurs de corrélation en tant que :

$$C_{in}(m) = tr \left\{ \left[ \hat{\mathbf{h}}^H(m)\mathbf{W}_{in} \right]^H \left[ \hat{\mathbf{h}}^H(m)\mathbf{W}_{in} \right] \right\},$$

m ≥ 1, et
b) le tri pour trouver les $N_{RX}$ plus grandes valeurs de corrélation $C_{in}(m_1) > C_{in}(m_2) > ... > C_{in}(m_{N_{RX}})$ et leurs vecteurs correspondants $\hat{\mathbf{h}}(m_1)$, $\hat{\mathbf{h}}(m_2)$, ..., $\hat{\mathbf{h}}(m_{N_{RX}})$ pour former la matrice de canaux $\hat{\mathbf{H}}_{in} = [\hat{\mathbf{h}}(m_1), \hat{\mathbf{h}}(m_2),..., \hat{\mathbf{h}}(m_{N_{RX}})]^H$.

**3.** Procédé selon la revendication 2, dans lequel un précodage non cohérent est utilisé et le procédé comprend en outre l'utilisation de la matrice représentative $\hat{\mathbf{H}}_{in}$, un multiplicateur de Lagrange $\upsilon_n$, et une estimation de variance de bruit $\sigma_i^2$ pour calculer des précodeurs $\mathbf{V}_{in}$.

**4.** Procédé selon la revendication 3, dans lequel les précodeurs $\mathbf{V}_{in}$ sont calculés en utilisant une procédure itérative.

**5.** Procédé selon la revendication 4, dans lequel les précodeurs $\mathbf{V}_{in}$ sont calculés en utilisant la procédure itérative suivante, où ($q$) représente une $q$-ième itération :

a) l'initialisation d'une quantité $\mathbf{G}_{in}$ ($q$ = 0) = $\mathbf{J}_{in}$, i = 1, ..., $N_{UE}$, où $\mathbf{J}_{in}$ est une matrice $RI_i \times \tau_n$ avec un (a,b)-ième élément égal à zéro pour $a \neq b$ et 1 pour $a = b$ ;
b) le calcul de $\mathbf{V}_{in}(q + 1)$ en utilisant $\mathbf{G}_{in}(q)$ et le multiplicateur de Lagrange $\upsilon_n$ pour $i$ = 1, ..., $N_{UE}$ comme suit :

$$\mathbf{V}_{in}(q+1) = \left[ \sum_{j=1}^{N_{UE}} \widehat{\mathbf{H}}_{jn}^H G_{jn}^H(q) \mathbf{G}_{jn}(q) \widehat{\mathbf{H}}_{jn} + \upsilon_n \mathbf{I} \right]^{-1} \widehat{\mathbf{H}}_{in}^H \mathbf{G}_{in}^H(q)$$

c) le calcul de $\mathbf{G}_{in}(q + 1)$ en utilisant $\mathbf{V}_{in}(q + 1)$ et l'estimation de variance de bruit $\sigma_i^2$ pour $i$ = 1, ..., $N_{UE}$ comme suit :

$$\mathbf{G}_{in}(q+1) = \mathbf{V}_{in}^{H}(q+1)\widehat{\mathbf{H}}_{in}^{H}\left[\sum_{j=1}^{N_{UE}} \widehat{\mathbf{H}}_{in}\mathbf{V}_{jn}(q+1)\mathbf{V}_{jn}^{H}(q+1)\widehat{\mathbf{H}}_{in}^{H} + \sigma_i^2\mathbf{I}\right]^{-1}$$

d) le calcul de $E = \sum^{N_{UE}} \|\mathbf{G}_{in}(q+1) - \mathbf{G}_{in}(q)\|_F^2$

e) la répétition de l'étape b), de l'étape c) et de l'étape d) jusqu'à ce que $\sum^{N_{UE}} \|\mathbf{G}_{in}(q+1) - \mathbf{G}_{in}(q)\|_F^2 < \varepsilon$, où $\|.\|_F^2$ représente la norme de Frobenius et $\varepsilon$ est un seuil convergent ; et

f) la sortie de $\mathbf{V}_{in}(q + 1)$, $i$ = 1, ..., $N_{UE}$.

**6.** Procédé selon la revendication 5, dans lequel le multiplicateur de Lagrange $\upsilon_n$ pour le n-ième TP est calculé en utilisant la procédure suivante :

a) le calcul de $\lambda_k$ en tant que

$$\mathbf{U}\Lambda\mathbf{U}^{H} = \sum^{N_{UE}} \widehat{\mathbf{H}}_{jn}^{H}\mathbf{G}_{jn}^{H}(m)\mathbf{G}_{in}(m)\widehat{\mathbf{H}}_{in}$$

b) le réglage de $\upsilon_{\min}$ et $\upsilon_{\max}$ ;

c) le réglage de $\upsilon_n = (\upsilon_{\max} + \upsilon_{\min})/2$ ;

d) le calcul d'une quantité $\widehat{P}_n = \sum_{k=1}^{\tau_n} \frac{\lambda_k}{(\lambda_k+\upsilon_n)^2}$ ;

e) la vérification de si $P_n > P_n$ et, si tel est le cas, le réglage de $\upsilon_{\min} = \upsilon_n$, sinon le réglage de $\upsilon_{\max} = \upsilon_n$, où $P_n$ est une puissance de transmission du n-ième TP;

f) la répétition de l'étape c), de l'étape d) et de l'étape e) jusqu'à ce que $|\widehat{P}_n - P_n| < \varepsilon$, où $\varepsilon$ est un seuil convergent ; et

g) la sortie de $\upsilon_n$

**7.** Procédé selon la revendication 3, dans lequel les CSI transmises de chaque UE à son TP de desserte incluent un indicateur de qualité de canal, CQI, et l'estimation de variance de bruit $\sigma_i^2$ est trouvée en utilisant le CQI comme suit :

a) la détermination d'un rapport de signal sur interférence plus bruit, $SINR_{il}$, sur la base de seuils dans la table de CQI ; et

b) le calcul de $\sigma_i^2$ en utilisant le $SINR_{il}$ et une puissance de transmission $P_s$ du TP de desserte comme suit :

$$\sigma_i^2 = \frac{P_s/N_{UE}}{\sum^{L_i} SINR_{il}/L_i}, \quad i = 1, ..., N_{UE}$$

où $L_i$ est un nombre de mots de code utilisés pour le i-ème UE.

**8.** Procédé selon la revendication 7, dans lequel, parmi jusqu'à $N_{TP}$ $RI_{in}$ rapportés, une majorité est sélectionnée en tant qu'un $RI_i$ commun unique pour le i-ème UE.

**9.** Procédé selon la revendication 8, dans lequel uniquement $CQI_{\hat{in}}(l)$ associés aux $RI_i$ sélectionnés sont candidats pour une sélection de CQI, la sélection est mise en oeuvre indépendamment par mot de code, et une majorité parmi les candidats est sélectionnée en tant que CQI commun pour le l-ième mot de code $CQI_i(l)$.

**10.** Système de communications sans fil de transmission/réception multipoint coordonnée de liaison descendante, DL CoMP, dans lequel une transmission commune, JT, est effectuée entre une pluralité de points de transmission, TP, et une pluralité d'équipements d'utilisateur, UE, dans lequel chaque UE a l'un des TP en tant que son TP de desserte, des informations d'état de canal, CSI, sont transmises de chaque UE à son TP de desserte, les CSI transmises incluent des indicateurs de matrice de précodeur, PMI, et les PMI sont utilisés pour générer des précodeurs pour une transmission de données de la pluralité de TP à la pluralité d'UE ;

dans lequel l'utilisation des PMI pour générer des précodeurs implique l'utilisation des PMI pour trouver une matrice représentative, $\hat{\mathbf{H}}_{in}$, représentant le canal, $\mathbf{H}_{in}$, entre un n-ième TP et un i-ème UE ;
dans lequel un livre de code fixe, $\Omega_{RI}$, de matrices représentatives est généré à partir de livre(s) de code de PMI, les CSI transmises de chaque UE à son TP de desserte incluent un indicateur de rang, RI, et $\Omega_{RI}$ est différent pour différents RI ;
dans lequel, si un RI pour le i-ème UE, $RI_i$, est égal à un nombre d'antennes de réception de l'UE, $N_{RX}$, alors $\Omega_{RI}$ contient des matrices $\hat{\mathbf{H}}(m)$, m ≥ 1, de taille $N_{RX} \times \tau_n$, où $\tau_n$ est un nombre d'antennes de transmission au n-ième TP ;
dans lequel, si $RI_i$ est inférieur à $N_{RX}$, alors $\Omega_{RI}$ contient des vecteurs $\hat{\mathbf{h}}(m)$, m ≥ 1, de taille $\tau_n \times 1$, et
dans lequel, pour $RI_i = N_{RX}$, la matrice représentative $\hat{\mathbf{H}}_{in}$ est trouvée par :

$$\hat{\mathbf{H}}_{in} = \hat{\mathbf{H}}(m^*) \in \mathbf{\Omega}_{RI},\ i = 1, \ldots, N_{UE},\ n = 1, \ldots, N_{TP}$$

avec

$$m^* = \arg\max tr\ \left\{\left[\hat{\mathbf{H}}(m)\mathbf{W}_{in}\right]^H\left[\hat{\mathbf{H}}(m)\mathbf{W}_{in}\right]\right\},\ \hat{\mathbf{H}}(m) \in \mathbf{\Omega}_{RI}$$

dans lequel
$N_{Tp}$ et $N_{UE}$ sont respectivement les nombres de TP et d'UE, et $\mathbf{W}_{in}$, ayant une taille $\tau_n \times RI_i$, est un précodeur associé à un PMI rapporté utilisé pour le précodage de données à envoyer du n-ième TP au i-ème UE.

Fig. 1

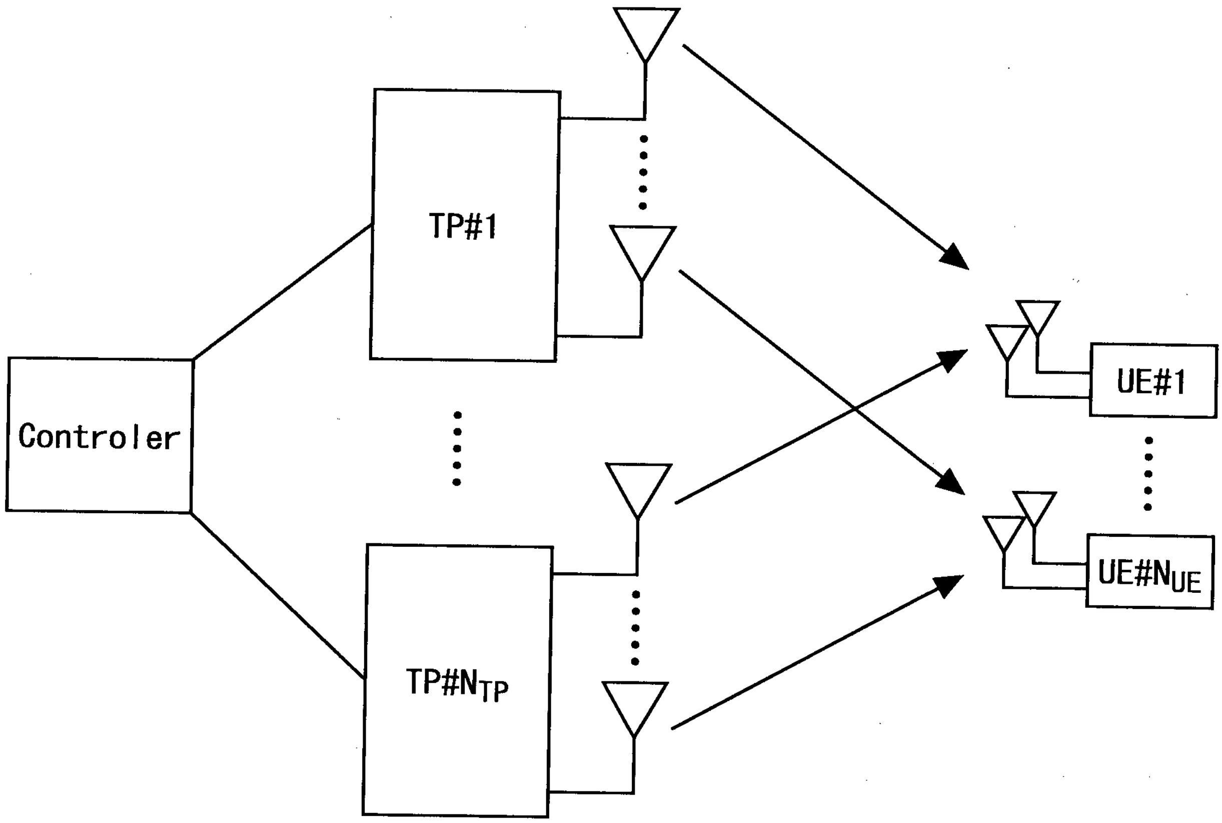

Fig. 2

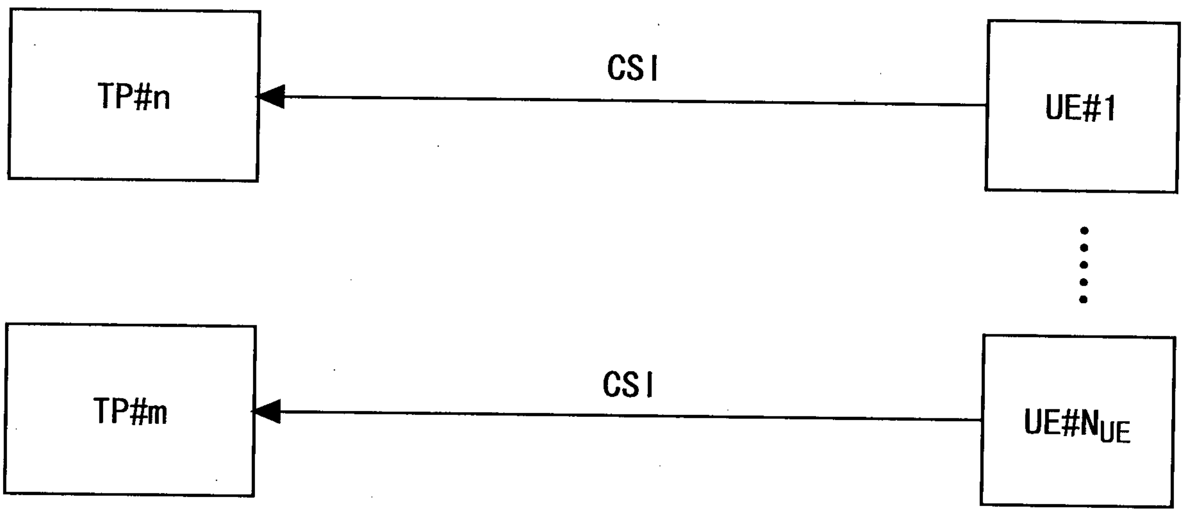

Fig. 3A

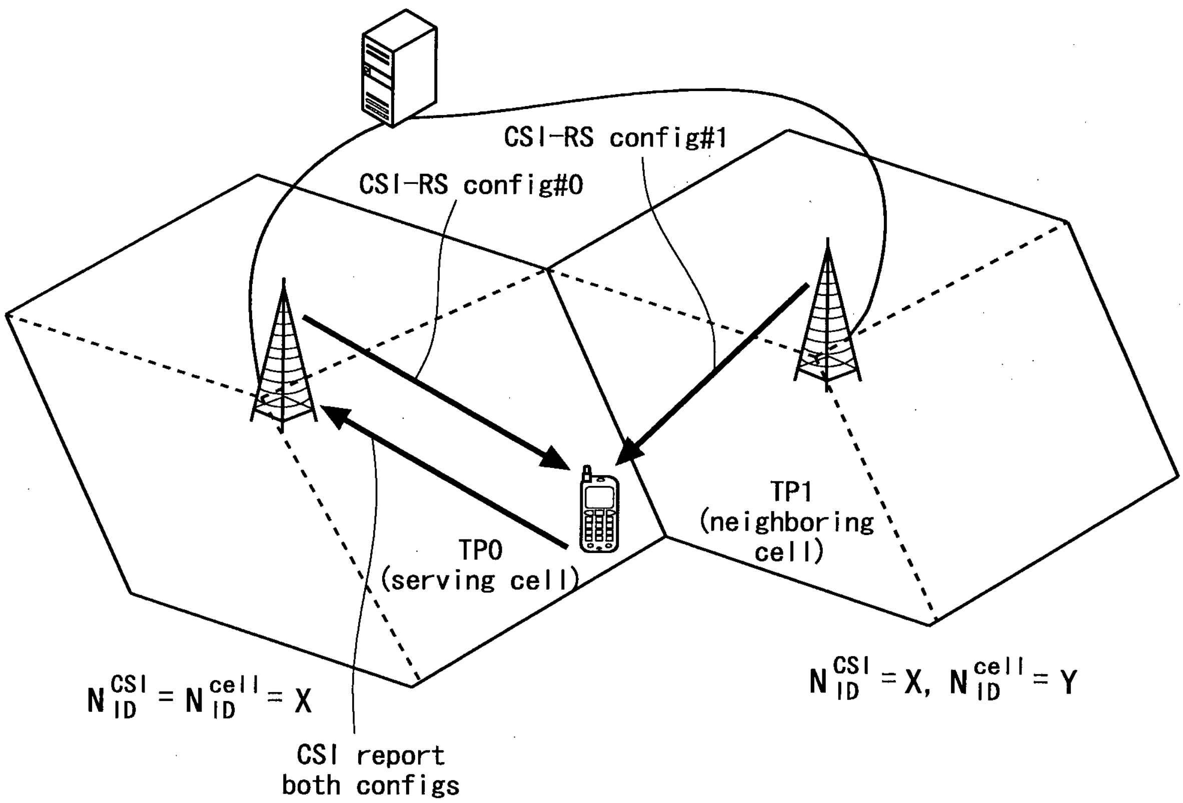
CSI-RS config#1
CSI-RS config#0
TP0
(serving cell)
TP1
(neighboring cell)
$N_{ID}^{CSI} = N_{ID}^{cell} = X$
$N_{ID}^{CSI} = X,\ N_{ID}^{cell} = Y$
CSI report
both configs

Fig. 3B

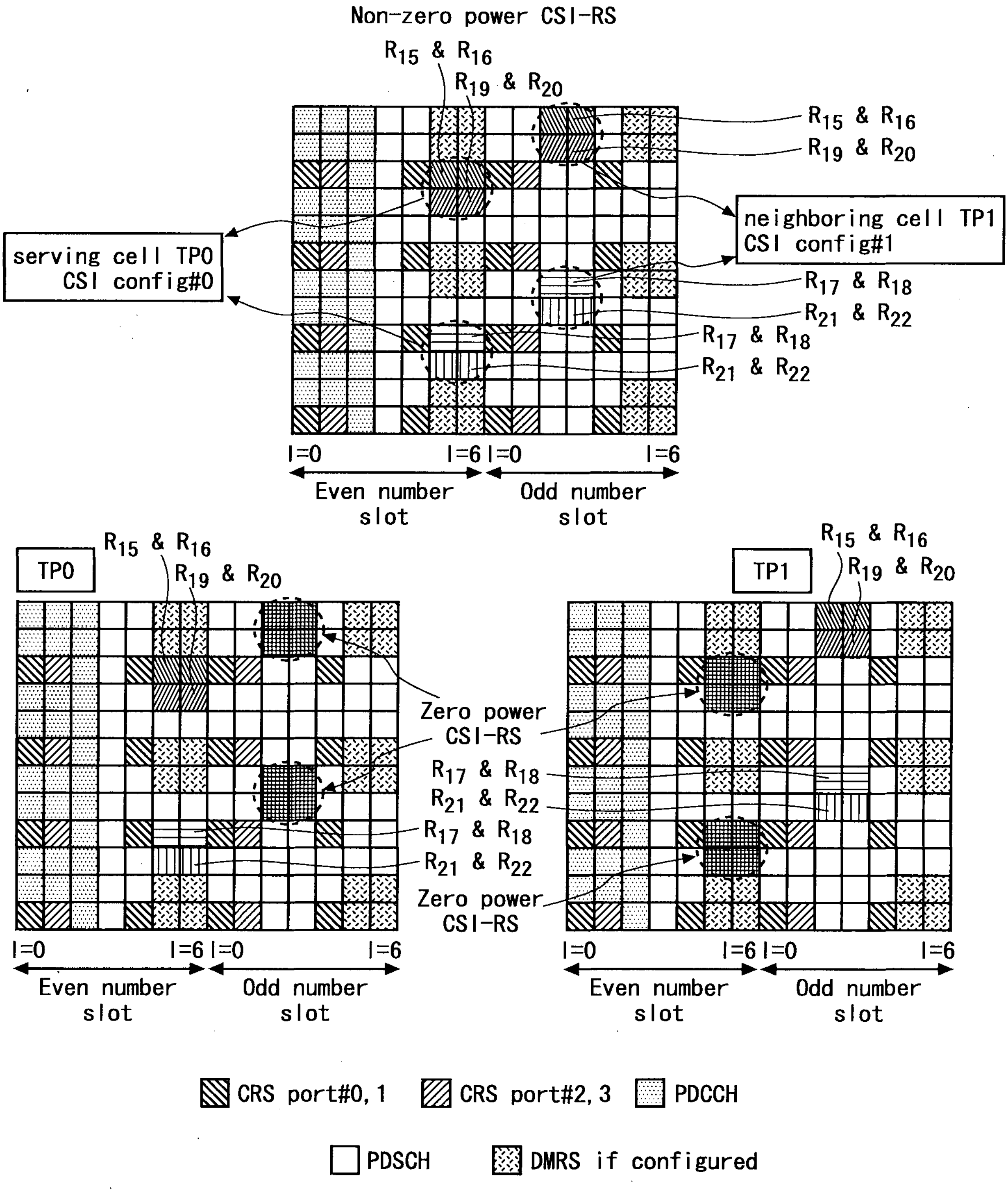
Non-zero power CSI-RS
R15 & R16
R19 & R20
R15 & R16
R19 & R20
neighboring cell TP1
CSI config#1
serving cell TP0
CSI config#0
R17 & R18
R21 & R22
R17 & R18
R21 & R22
l=0
l=6
l=0
l=6
Even number slot
Odd number slot
TP0
R15 & R16
R19 & R20
TP1
R15 & R16
R19 & R20
Zero power CSI-RS
R17 & R18
R21 & R22
R17 & R18
R21 & R22
Zero power CSI-RS
l=0
l=6
l=0
l=6
Even number slot
Odd number slot
l=0
l=6
l=0
l=6
Even number slot
Odd number slot
CRS port#0, 1
CRS port#2, 3
PDCCH
PDSCH
DMRS if configured

Fig. 4

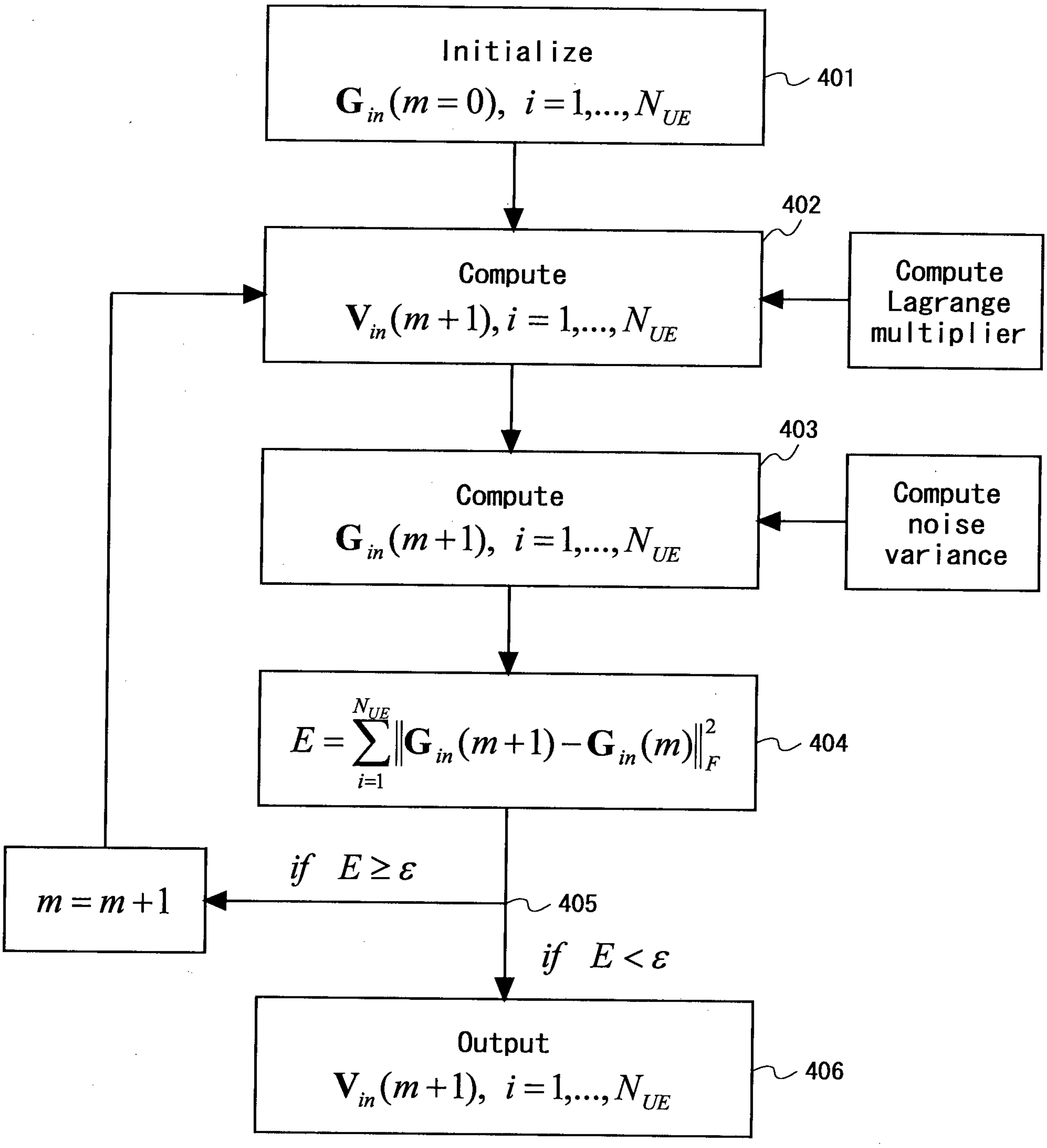
Initialize
$\mathbf{G}_{in}(m=0),\ i=1,\ldots,N_{UE}$
401
402
Compute
$\mathbf{V}_{in}(m+1), i=1,\ldots,N_{UE}$
Compute Lagrange multiplier
403
Compute
$\mathbf{G}_{in}(m+1),\ i=1,\ldots,N_{UE}$
Compute noise variance
$E=\sum_{i=1}^{N_{UE}}\left\|\mathbf{G}_{in}(m+1)-\mathbf{G}_{in}(m)\right\|_F^2$
404
$m=m+1$
$if\ \ E\geq\varepsilon$
405
$if\ \ E<\varepsilon$
Output
$\mathbf{V}_{in}(m+1),\ i=1,\ldots,N_{UE}$
406

Fig. 5

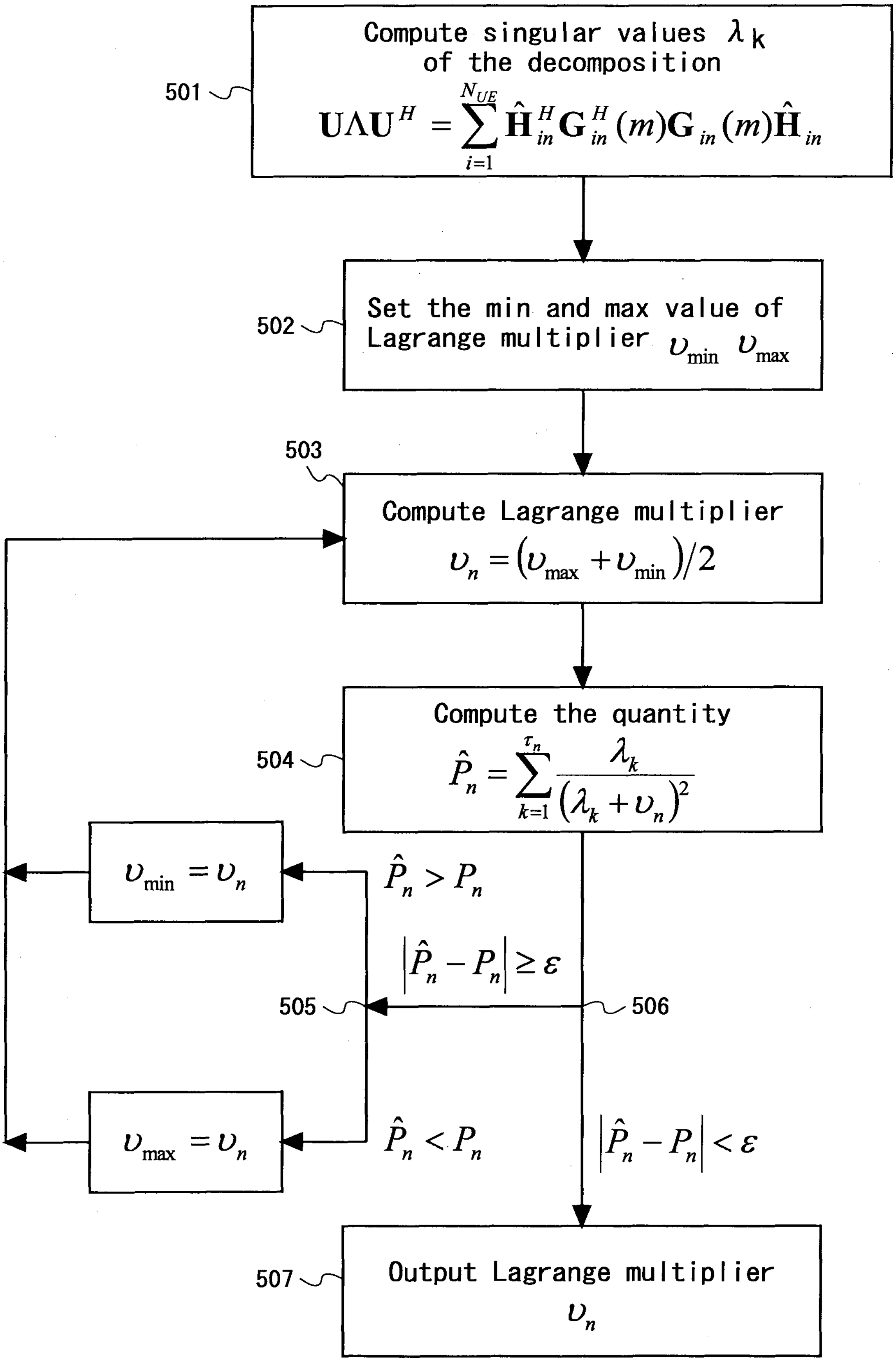
Compute singular values $\lambda_k$ of the decomposition
$U\Lambda U^H = \sum_{i=1}^{N_{UE}} \hat{H}_{in}^H G_{in}^H(m) G_{in}(m) \hat{H}_{in}$
501
Set the min and max value of Lagrange multiplier $\upsilon_{min}$ $\upsilon_{max}$
502
Compute Lagrange multiplier $\upsilon_n = (\upsilon_{max} + \upsilon_{min})/2$
503
Compute the quantity $\hat{P}_n = \sum_{k=1}^{\tau_n} \frac{\lambda_k}{(\lambda_k + \upsilon_n)^2}$
504
$\upsilon_{min} = \upsilon_n$
$\hat{P}_n > P_n$
$|\hat{P}_n - P_n| \geq \varepsilon$
505
506
$\upsilon_{max} = \upsilon_n$
$\hat{P}_n < P_n$
$|\hat{P}_n - P_n| < \varepsilon$
Output Lagrange multiplier $\upsilon_n$
507

Fig. 6

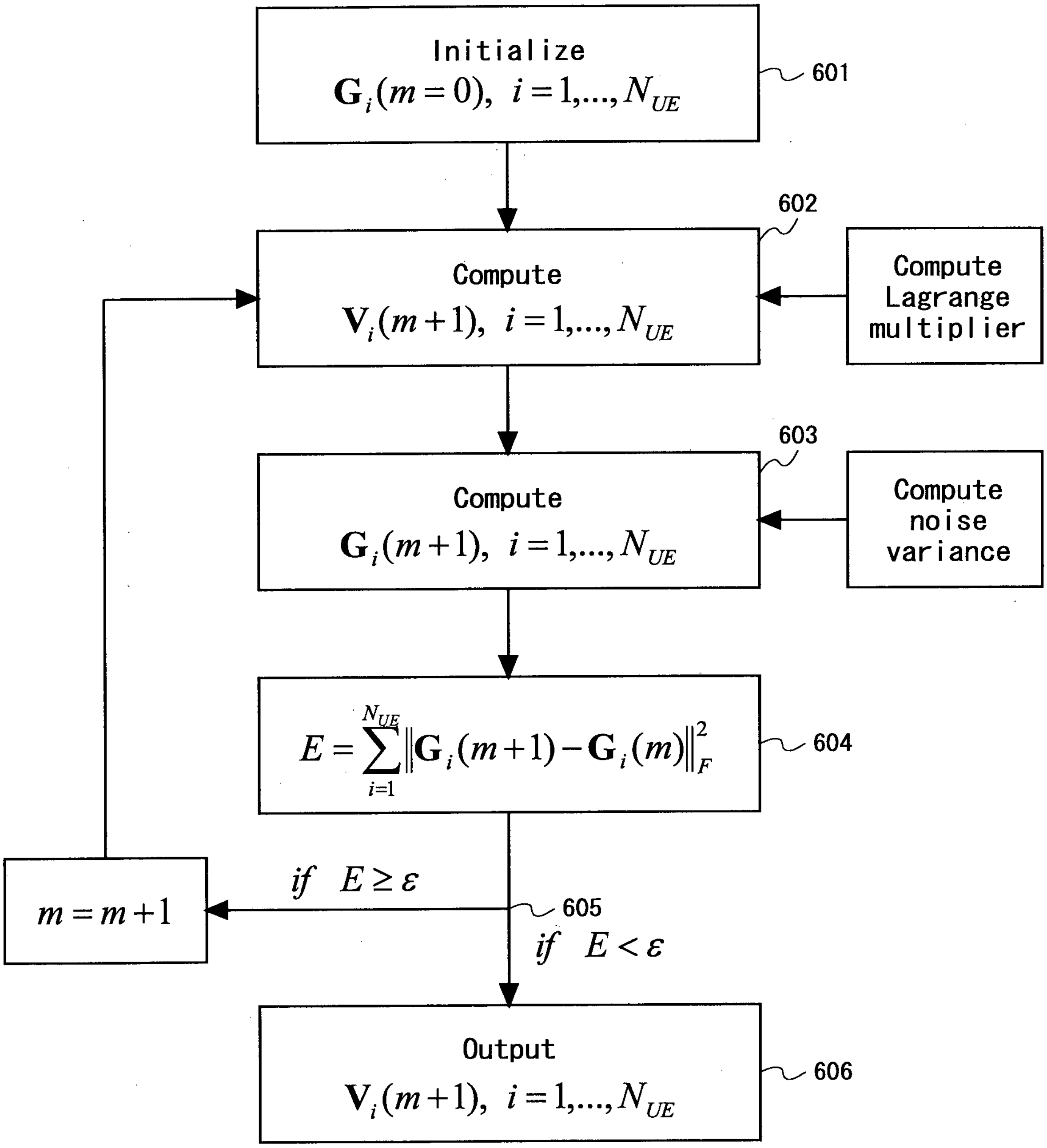
Initialize
$\mathbf{G}_i(m=0),\ i=1,\ldots,N_{UE}$
601
602
Compute
$\mathbf{V}_i(m+1),\ i=1,\ldots,N_{UE}$
Compute Lagrange multiplier
603
Compute
$\mathbf{G}_i(m+1),\ i=1,\ldots,N_{UE}$
Compute noise variance
$E=\sum_{i=1}^{N_{UE}}\left\|\mathbf{G}_i(m+1)-\mathbf{G}_i(m)\right\|_F^2$
604
$if\ \ E\geq\varepsilon$
$m=m+1$
605
$if\ \ E<\varepsilon$
Output
$\mathbf{V}_i(m+1),\ i=1,\ldots,N_{UE}$
606

Fig. 7

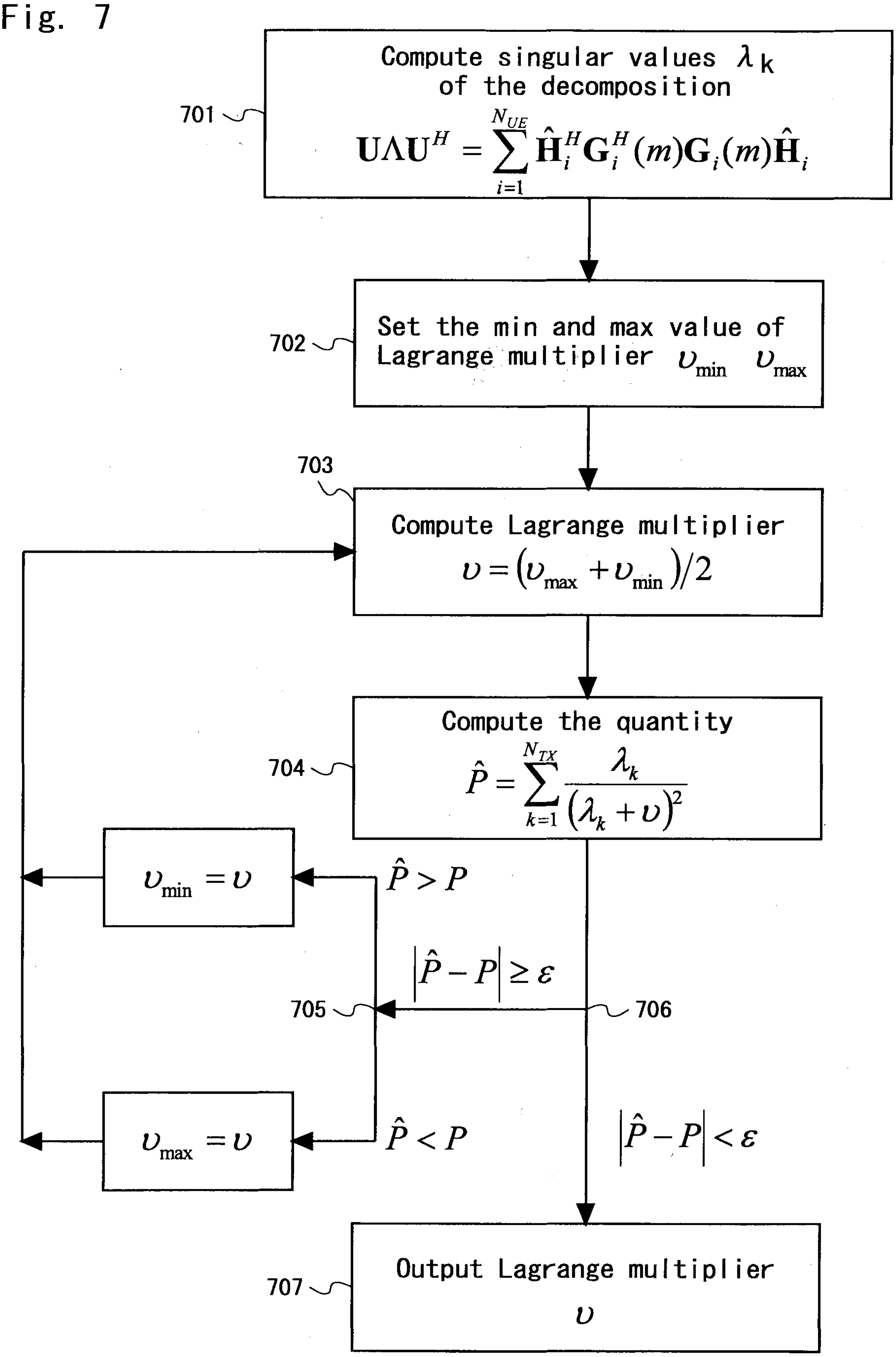
Compute singular values λk of the decomposition
$\mathbf{U\Lambda U}^H = \sum_{i=1}^{N_{UE}} \hat{\mathbf{H}}_i^H \mathbf{G}_i^H(m)\mathbf{G}_i(m)\hat{\mathbf{H}}_i$
701
Set the min and max value of Lagrange multiplier $\upsilon_{min}$ $\upsilon_{max}$
702
703
Compute Lagrange multiplier
$\upsilon = (\upsilon_{max} + \upsilon_{min})/2$
Compute the quantity
$\hat{P} = \sum_{k=1}^{N_{TX}} \frac{\lambda_k}{(\lambda_k + \upsilon)^2}$
704
$\upsilon_{min} = \upsilon$
$\hat{P} > P$
$|\hat{P} - P| \geq \varepsilon$
705
706
$\upsilon_{max} = \upsilon$
$\hat{P} < P$
$|\hat{P} - P| < \varepsilon$
Output Lagrange multiplier
$\upsilon$
707

Fig. 8

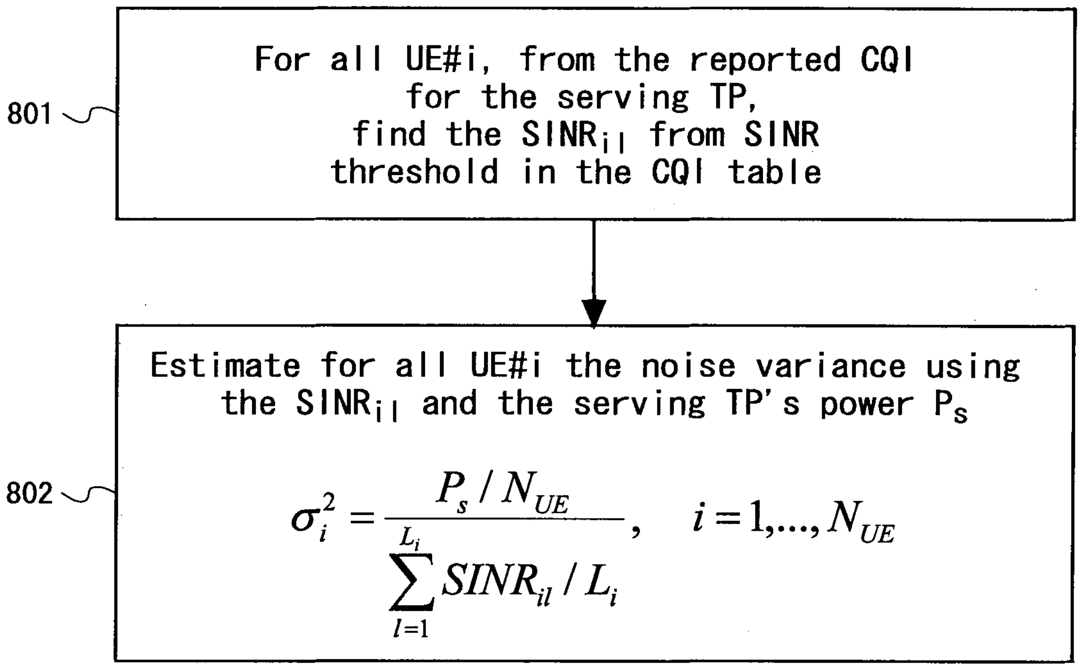
801
For all UE#i, from the reported CQI for the serving TP, find the $SINR_{il}$ from SINR threshold in the CQI table
802
Estimate for all UE#i the noise variance using the $SINR_{il}$ and the serving TP's power $P_S$
$$\sigma_i^2 = \frac{P_s / N_{UE}}{\sum_{l=1}^{L_i} SINR_{il} / L_i}, \quad i = 1,\ldots,N_{UE}$$

Fig. 9

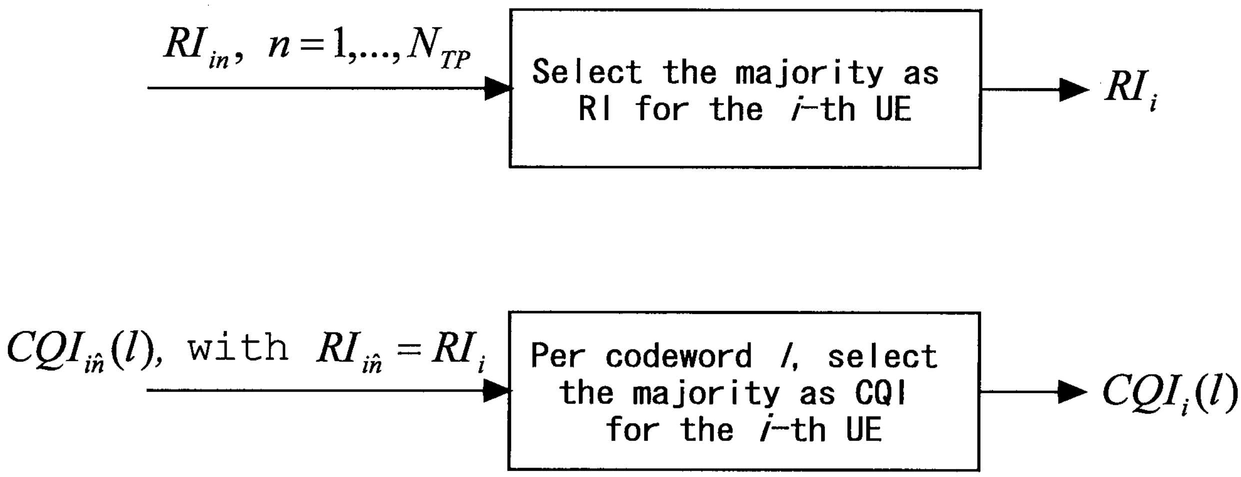
$RI_{in}$, $n = 1,\ldots,N_{TP}$
Select the majority as RI for the $i$-th UE
$RI_i$
$CQI_{i\hat{n}}(l)$, with $RI_{i\hat{n}} = RI_i$
Per codeword $l$, select the majority as CQI for the $i$-th UE
$CQI_i(l)$

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2013089159 A1
- US 2011103287 A1
- US 2013021925 A1
- AU 2013902955

### Non-patent literature cited in the description

- **SAMPATH H. ; PAULRAJ A.** Joint Transmit and Receive Optimization for High Data Rate Wireless Communication Using Multiple Antennas. *Thirty-Third Asilomar Conference on Signals, Systems, and Computers,* 1999
- **ZHANG J.** Joint Linear Transmitter and Receiver Design for Downlink of Multiuser MIMO Systems. *IEEE Communications Letters,* November 2005, vol. 9 (11